# EUROPÄISCHE PATENTSCHRIFT

(11) **EP 1 236 872 B1**
(45) Veröffentlichungstag und Bekanntmachung des Hinweises auf die Patenterteilung: **17.12.2003**
(21) Anmeldenummer: 02001386.8
(22) Anmeldetag: 19.01.2002
(51) Int. Cl.: F01N 3/28

(54) **Abgasreinigungsvorrichtung**
Exhaust gas cleaning device
Dispositif de nettoyage de gaz d'échappement

(30) Priorität: 20.02.2001 DE 10107856; 20.03.2001 DE 20104741 U
(43) Veröffentlichungstag der Anmeldung: 04.09.2002
(73) Patentinhaber: ZEUNA-STÄRKER GMBH & CO KG, 86154 Augsburg (DE)
(72) Erfinder: Noller, Christopf, 86343 Königsbrunn (DE); Bauss, Andrea, 89420 Höchstädt (DE)
(74) Vertreter: Grättinger & Partner (GbR)

(56) Entgegenhaltungen:
- DE-A- 2 400 443
- DE-U- 8 019 814
- DE-U- 8 115 324
- GB-A- 1 484 933
- US-A- 4 958 491

## Beschreibung

Die vorliegende Erfindung betrifft eine Abgasreinigungsvorrichtung für ein verbrennungsmotorisch angetriebenes Kraftfahrzeug mit einem Gehäuse und mindestens einem darin über Lagerungselemente gelagerten Abgasreinigungskörper, wobei mindestens ein Lagerungselement als endseitig am Abgasreinigungskörper angeordneter Metallfaserring ausgeführt ist, der sich in radialer und axialer Richtung am Gehäuse abstützt und mit einer ersten Kontaktfläche an einer radialen Außenfläche und mit einer zweiten Kontaktfläche an einer Stirnfläche des betreffenden Abgasreinigungskörpers anliegt,

Abgasreinigungsvorrichtungen für verbrennungsmotorisch angetriebene Kraftfahrzeuge zählen in verschiedenen Ausführungen zum Stand der Technik. Bekannt sind insbesondere katalytische Abgasreinigungsvorrichtungen, bei denen der mindestens eine Abgasreinigungskörper als keramischer, monolitischer, wabenförmig strukturierter, katalytisch beschichteter Katalysatorkörper ausgeführt ist, und Rußfilter mit einem ebenfalls wabenförmig strukturierten monolitischen Partikelfilterkörper. Die keramischen Abgasreinigungskörper sind dabei vergleichsweise spröde und bruchempfindlich. Aus diesem Grunde wird besonderes Augenmerk darauf gerichtet, die Abgasreinigungskörper in dem jeweiligen Gehäuse so zu lagern, daß trotz der starken Erschütterungen, denen Abgasreinigungsvorrichtungen ausgesetzt sind, Spannungsspitzen, die zum Bruch des jeweiligen Abgasreinigungskörpers führen können, möglichst vermieden werden.

Was die Lagerung der Abgasreinigungskörper in dem jeweiligen Gehäuse angeht, so wird unterschieden zwischen der großflächigen Lagerung über sogenannte Quellmatten einerseits und der örtlich begrenzten Lagerung über Metallfaserringe, wie sie beispielsweise aus der zur Gattungsbildung herangezogenen US-A 4,203,949 bekannt ist, andererseits. Die aus diesem Dokument bekannte Gestaltung der Lagerungselemente resultiert in einer zuverlässigen Fixierung des Abgasreinigungskörpers gegen axiale Verlagerung auch im Falle von starken Erschütterungen. Allerdings ist diese Form der Lagerung, anders als die mittels Quellmatte (vgl. z.B. US-A 5,118,476), relativ empfindlich gegen axiale Längentoleranzen von Gehäuse und Abgasreinigungskörper, da diese unter ungünstigen Umständen leicht zu unzulässig hohen Druckspannungen auf die Stirnflächen der Abgasreinigungskörper führen können.

Hieraus leitet sich die der vorliegenden Erfindung zugrundeliegende Aufgabenstellung ab, die darin besteht, eine Abgasreinigungsvorrichtung der eingangs angegebenen Art zu schaffen, die sich bei zuverlässiger axialer Fixierung des mindestens einen Abgasreinigungskörpers in dem Gehäuse als vergleichsweise unempfindlich gegenüber axialen Längentoleranzen des Abgasreinigungsköpers und/oder des Gehäuses erweist.

Gemäß der vorliegenden Erfindung wird diese Aufgabe dadurch gelöst, daß zwischen der ersten und der zweiten Kontaktfläche des Metallfaserringes eine sich im wesentlichen in axialer Richtung erstreckende Einkerbung vorgesehen ist. Die erfindungsgemäße Abgasreinigungsvorichtung zeichnet sich mit anderen Worten durch eine spezifische Gestaltung des mindestens einen Metallfaserringes aus, und zwar dergestalt, daß die zweite, an einer Stirnfläche des betreffenden Abgasreinigungskörpers anliegende Kontaktfläche des Metallfaserringes von der ersten Kontaktfläche, welche an einer radialen Außenfläche des Abgasreinigungskörpers anliegt, über eine sich im wesentlichen in axialer Richtung erstrekkende ringförmige Einkerbung abgesetzt ist. Diese sich im wesentlichen in axialer Richtung erstreckende, dem Abgasreinigungskörper zugewandte Einkerbung zwischen den beiden Kontaktflächen des Metallfaserringes wirkt sich dahingehend aus, daß sich derjenige Bereich des Metallfaserringes, der über die zweite Kontaktfläche an der Stirnfläche des Abgasreinigungskörpers anliegt, zum Ausgleich von Längentoleranzen des Abgasreinigungskörpers und des Gehäuses der Abgasreinigungsvorrichtung definiert verformen kann. Indem sich bei einer entsprechenden Verformung des Metallfaserringes das verdrängte Material radial nach außen in die erfindungsgemäß vorgesehene freie Einkerbung hinein verlagern kann, werden auch bei ungünstigen Toleranzverhältnissen (besonders langer Abgasreinigungskörper bei besonders kurzem Gehäuse) unzulässig hohe Druckspannungen auf die Stirnfläche des betreffenden Abgasreinigungskörpers zuverlässig vermieden. Als besonderer Vorteil der erfindungsgemäßen Gestaltung der Abgasreinigungsvorrichtung stellt sich, nachdem Abmessungstoleranzen ohne nachteilige Auswirkungen bleiben, ein besonders geringer Montageaufwand bei einer niedrigen Ausschußrate und einer hohen Lebensdauer der Abgasreinigungsvorrichtungen ein.

Die vorliegende Erfindung gestattet nicht nur die zuverlässige Lagerung konventioneller Abgasreinigungskörper. Vielmehr läßt sich die erfindungsgemäße Lagerung rung des/der Abgasreinigungskörper(s) mit besonders großem Nutzen in Verbindung mit solchen Abgasreinigungskörpern realisieren, die in Dünnwandtechnik (mehr als ca. 60 Waben pro cm²) bzw. in Ultradünnwandtechnik (mehr als ca. 90 Waben pro cm²) ausgeführt sind. Die Lagerung dieser besonders fragilen Abgasreinigungskörper unter Verwendung bekannter Lagerungselemente führt nicht zu zufriedenstellenden Ergebnissen.

Eine bevorzugte Weiterbildung der erfindungsgemäßen Abgasreinigungsvorrichtung zeichnet sich dadurch aus, daß die zweite Kontaktfläche auf einem wulstförmigen Ringabschnitt des Metallfaserringes angeordnet ist. Der wulstförmige Ringabschnitt des Metallfaserringes kann dabei insbesondere benachbart der zweiten Kontaktfläche konvex gewölbt sein, wobei die Einkerbung einseitig durch eine gewölbte Fläche des wulstförmigen Ringabschnitts begrenzt ist. Diese Gestaltung des Metallfaserringes begünstigt in besonderer Weise die den Toleranzausgleich bewirkende Verformung des Metallfaserringes und führt zu einer besonders vorteilhaften Kennlinie der elastischen Nachgiebigkeit des Metallfaserrings.

Für die Ausführung des Metallfaserringes bietet sich insbesondere ein Drahtgestrick oder Drahtgewirk an. In diesem Falle lassen sich die elastisch nachgiebigen Eigenschaften des Metallfaserringes besonders gut auf die jeweiligen Anforderungen abstimmen. Insbesondere begünstigt diese Weiterbildung der Erfindung, daß der Metallfaserring mit einer unterschiedlichen Nachgiebigkeit (Federkennlinie) in axialer Richtung in dem der axialen Abstützung des Abgasreinigungskörpers dienenden Bereich einerseits und in radialer Richtung in dem der radialen Abstützung des Abgasreinigungskörpers dienenden Bereich andererseits ausgeführt werden kann. In diesem Sinne zeichnet sich eine besonders bevorzugte Weiterbildung der Erfindung dadurch aus, daß die Nachgiebigkeit in axialer Richtung geringer ist als in radialer Richtung. Mit anderen Worten: der solchermaßen weitergebildete Metallfaserring ist in radialer Richtung härter als in axialer Richtung. Erreichen läßt sich dies beispielsweise durch eine geeignete Orientierung der Metallfasern in dem Metallfaserring und/oder eine unterschiedliche Dichte oder Dicke der Metallfasern in den verschiedenen Funktionsbereichen des Metallfaserringes.

Gemäß einer anderen bevorzugten Weiterbildung der Erfindung ist vorgesehen, daß die axiale Abstützung des Metallfaserringes an dem Gehäuse an einer schrägen Stützfläche des Gehäuses erfolgt. Insbesondere kann in diesem Falle die Stützfläche konisch ausgeführt sein, wobei sich als besonders günstig erweist, wenn der doppelte Kegelwinkel der Stützfläche zwischen 30° und 60° beträgt. Eine derartige Abstützung des Metallfaserrings am Gehäuse in axialer Richtung über eine schräge Stützfläche unterstützt den weiter oben erläuterten Toleranzausgleich. Dies gilt namentlich dann, wenn die radial innere Begrenzung der schrägen Stützfläche des Gehäuses radial außerhalb der zweiten Kontaktfläche, über welche der Metallfaserring an der Stirnfläche des Abgasreinigungskörpers anliegt, angeordnet ist. Denn in diesem Falle ergibt sich eine besonders günstige axiale Nachgiebigkeit des Metallfaserringes.

Eine wiederum andere bevorzugte Weiterbildung der Erfindung zeichnet sich dadurch aus, daß das Gehäuse aus einem - im wesentlichen zylindrischen - Mantel und mindestens einem mit diesem verbundenen Trichter zusammengefügt ist. Die vorstehend erläuterte schräge Stützfläche kann dabei insbesondere auf einem sich verjüngendem Randabschnitt des Mantels angeordnet sein, welcher seinerseits besonders bevorzugt als Wickelteil ausgeführt ist. In Betracht kommt allerdings in entsprechender Weise die Anordnung der schrägen Stützfläche auf einem sich erweiternden Randabschnitt des Trichters.

Zur Klarstellung sei darauf hingewiesen, daß im Rahmen der vorliegenden Erfindung weder die erste noch die zweite Kontaktfläche des Metallfaserringes zwingend unterbrechungsfrei ausgeführt sein muß. Vielmehr kann jede der beiden Kontaktflächen bei Bedarf durch geeignete Unterbrechungen im einzelne Abschnitte bzw. Segmente untergliedert sein. Namentlich gilt dies für die an der Stirnseite des Abgasreinigungskörpers anliegende zweite Kontaktfläche des Metallfaserringes. Eine solche unterbrochene Ausführung der zweiten Kontaktfläche erweist sich insbesondere bei Abgasreinigungsvorrichtungen als günstig, deren mindestens einer Abgasreinigungskörper einen unrunden, z.B. einen dreieckigen Querschnitt aufweist.

Im folgenden wird die vorliegende Erfindung anhand zweier in der Zeichnung veranschaulichter bevorzugter Ausführungsbeispiele näher erläutert. Dabei zeigt
- Fig. 1: einen Längsschnitt durch den Mittelteil einer katalytischen Abgasreinigungsvorrichtung nach der vorliegenden Erfindung, und
- Fig. 2: in vergrößerter Darstellung des Querschnitt der beiden bei der Abgasreinigungsvorrichtung gemäß Figur 1 zur Lagerung des Abgasreinigungskörpers eingesetzten Metallfaserringe. Demgegenüber veranschaulicht
- Fig. 3: in Draufsicht und
- Fig. 4: in einem Axialschnitt eine modifizierte Ausführungsform des im Rahmen der vorliegenden Erfindung einsetzbaren Metallfaserringes.

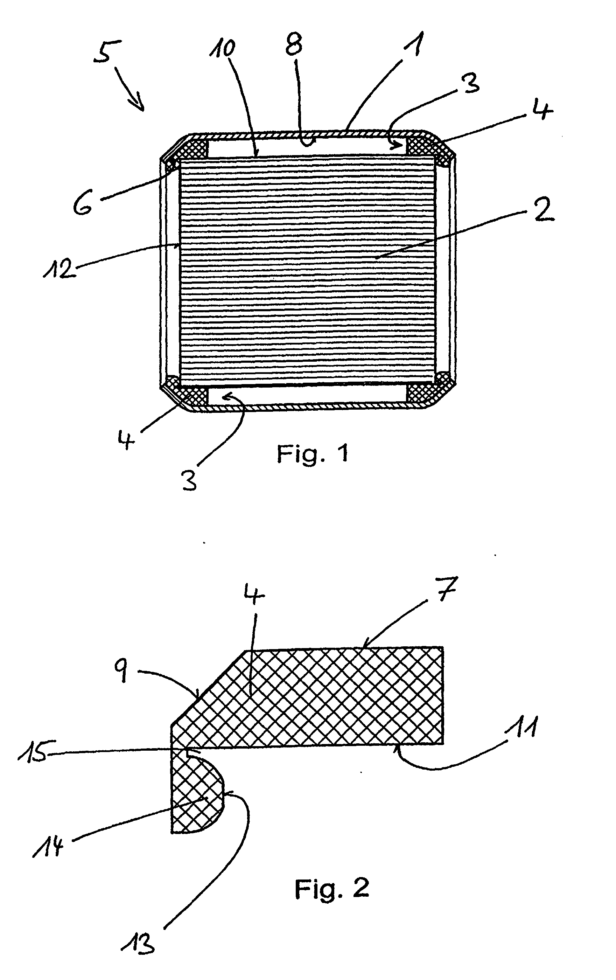

Der in Figur 1 veranschaulichte Mittelteil einer katalytischen Abgasreinigungsvorrichtung umfaßt einen Mantel 1, welcher Teil des Gehäuses der betreffenden Abgasreinigungsvorrichtung ist, und einen zylindrischen Katalysatorkörper 2. Letzter ist in dem Mantel 1 mittels zweier Lagerungselemente 3, welche jeweils als endseitig an dem Abgasreinigungskörper angeordneter einstückiger Metallfaserring 4 ausgeführt sind, gelagert.

Der Mantel 1 ist in seinen beiden Randbereichen 5 konisch eingezogen. Hierdurch ergeben sich konische Stützflächen 6, an denen sich der jeweils zugeordnete Metallfaserring 4 in axialer Richtung abstützt. Zur Vervollständigung des Gehäuses werden an den Mantel 1 endseitig zwei Trichter angeschweißt, nachdem, wie in Figur 1 veranschaulicht, der Abgasreinigungskörper 2 mitsamt den beiden Metallfaserringen 4 in den rohrförmigen Mantel 1 eingesetzt worden ist und am Mantel die beiden endseitigen konischen Bereiche ausgeformt worden sind.

Die beiden Metallfaserringe weisen jeweils einen im wesentlichen L-förmigen Querschnitt auf, wie dies in Figur 2 veranschaulicht ist. Jeder Metallfaserring 4 liegt zu seiner radialen Abstützung mit seiner zylindrischen äußeren Umfangsfläche 7 an der zylindrischen Innenfläche 8 des Mantels 1 und mit seiner Konusfläche 9 an der konischen Stützfläche 6 des Mantels 1 an. Der Abgasreinigungskörper 2 liegt mit seiner radialen Außenfläche 10 an einer ersten, zylindrischen Kontaktfläche 11 und mit seiner Stirnfläche 12 an einer zweiten, ringförmigen Kontaktfläche 13 des Metallfaserringes 4 an. Die zweite Kontaktfläche 13 ist dabei auf einem wulstförmigen Ringabschnitt 14 des Metallfaserringes 4 angeordnet, wobei der wulstförmigen Ringabschnitt 14 benachbart der zweiten Kontaktfläche 13 konvex gewölbt ist. Zwischen der ersten Kontaktfläche 11 und der zweiten Kontaktfläche 13 des Metallfaserringes 4 ist eine sich im wesentlichen in axialer Richtung erstreckende, sich in Richtung auf den Abgasreinigungskörper 2 öffnende ringförmige Einkerbung 15 vorgesehen. Diese ist außen durch eine Fortsetzung der ersten Kontaktfläche 11 und innen durch die zugeordnete konvex gewölbte Oberfläche des wulstförmigen Ringabschnitts 14 begrenzt.

Die radial innere Begrenzung 16 der konischen Stützfläche 6 des Mantels 1 liegt radial außerhalb der zugeordneten zweiten Kontaktfläche 13 des Metallfaserringes 4.

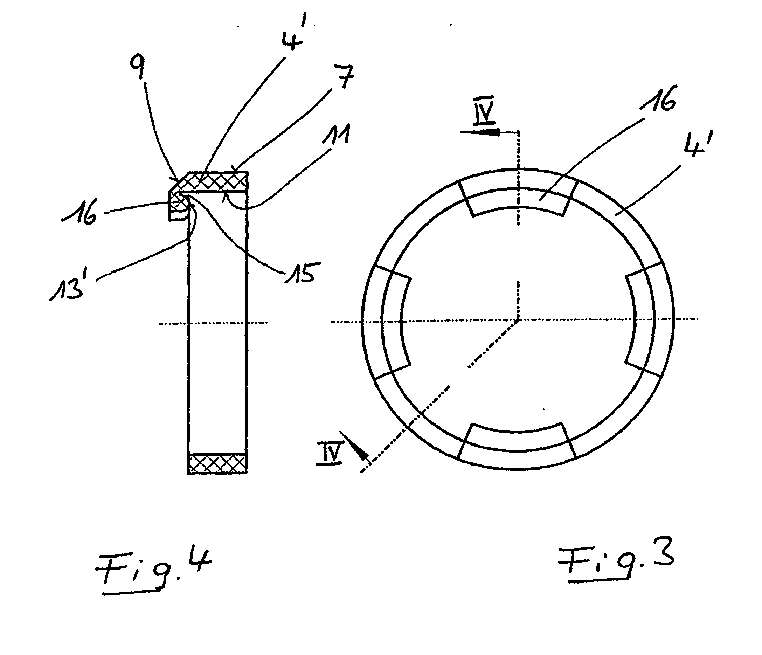

Die Fig. 3 und 4 zeigen einen Metallfaserring 4', dessen zweite Kontaktfläche 13' unterbrochen ist. Durch die entsprechenden vier Unterbrechungen sind vier Segmente 16 gebildet, auf denen die vier Abschnitte der zweiten Kontaktfläche 13' angeordnet sind.

Im übrigen gelten für den Metallfaserring gemäß den Fig. 3 und 4 die obigen Erläuterungen zu den Fig. 1 und 2.

## Patentansprüche

1. Abgasreinigungsvorrichtung für ein verbrennungsmotorisch angetriebenes Kraftfahrzeug mit einem Gehäuse und mindestens einem darin über Lagerungselemente (3) gelagerten Abgasreinigungskörper (2), wobei mindestens ein Lagerungselement (3) als einseitig am Abgasreinigungskörper (2) angeordneter Metallfaserring (4,4') ausgeführt ist, der sich in radialer und axialer Richtung am Gehäuse abstützt und mit einer ersten Kontaktfläche (11) an einer radialen Außenfläche (10) und mit einer zweiten Kontaktfläche (13,13') an einer Stirnfläche (12) des betreffenden Abgasreinigungskörpers (2) anliegt,
**dadurch gekennzeichnet,**
**daß** zwischen der ersten (11) und der zweiten (13,13') Kontaktfläche des Metallfaserringes (4,4') eine sich im wesentlichen in axialer Richtung erstreckende Einkerbung (15) vorgesehen ist.

2. Abgasreinigungsvorrichtung nach Anspruch 1,
**dadurch gekennzeichnet,**
**daß** die zweite Kontaktfläche (13,13') auf einem wulstförmigen Ringabschnitt (14) des Metallfaserringes (4,4') angeordnet ist.

3. Abgasreinigungsvorrichtung nach Anspruch 2,
**dadurch gekennzeichnet,**
**daß** der wulstförmige Ringabschnitt (14) des Metallfaserringes (4,4') benachbart der zweiten Kontaktfläche (13,13') konvex gewölbt ist, wobei die Einkerbung (15) einseitig durch eine gewölbte Fläche des wulstförmigen Ringabschnitts (14) begrenzt ist.

4. Abgasreinigungsvorrichtung nach einem der Ansprüche 1 bis 3,
**dadurch gekennzeichnet,**
**daß** der Metallfaserring (4,4') als Drahtgestrickoder Drahtgewirkring ausgeführt ist.

5. Abgasreinigungsvorrichtung nach einem der Ansprüche 1 bis 4,
**dadurch gekennzeichnet,**
**daß** sich der Metallfaserring (4,4') an einer schrägen Stützfläche (6) des Gehäuses abstützt.

6. Abgasreinigungsvorrichtung nach Anspruch 5,
**dadurch gekennzeichnet, daß** die Stützfläche (6) konisch ausgeführt ist.

7. Abgasreinigungsvorrichtung nach Anspruch 6,
**dadurch gekennzeichnet,**
**daß** der doppelte Kegelwinkel der Stützfläche (6) zwischen 30° und 60° beträgt.

8. Abgasreinigungsvorrichtung nach einem der Ansprüche 1 bis 7,
**dadurch gekennzeichnet,**
**daß** das Gehäuse einen Mantel (1) und mindestens einen mit diesem verbundenen Trichter umfaßt.

9. Abgasreinigungsvorrichtung nach Anspruch 8,
**dadurch gekennzeichnet,**
**daß** die Stützfläche (6) auf einem sich verjüngenden Randabschnitt des Mantels (1) angeordnet ist.

10. Abgasreinigungsvorrichtung nach Anspruch 8,
**dadurch gekennzeichnet,**
**daß** die Stützfläche (6) auf einem sich erweiternden Randabschnitt des Trichters angeordnet ist.

11. Abgasreinigungsvorrichtung nach einem der Ansprüche 8 bis 10,
**dadurch gekennzeichnet,**
**daß** der Mantel (1) als Wickelteil ausgeführt ist.

12. Abgasreinigungsvorrichtung nach einem der Ansprüche 8 bis 10,
**dadurch gekennzeichnet,**
**daß** der Mantel (1) als Rohrteil ausgeführt ist.

13. Abgasreinigungsvorrichtung nach einem der Ansprüche 1 bis 12,
**dadurch gekennzeichnet,**
**daß** der mindestens eine Abgasreinigungskörper (2) in Dünnwandtechnik, besonders bevorzugt in Ultradünnwandtechnik ausgeführt ist.

14. Abgasreinigungsvorrichtung nach einem der Ansprüche 1 bis 13,
**dadurch gekennzeichnet,**
**daß** die Nachgiebigkeit des Metallfaserringes (4,4') in radialer Richtung geringer ist als in axialer Richtung.

15. Abgasreinigungsvorrichtung nach einem der Ansprüche 1 bis 14,
**dadurch gekennzeichnet,**
**daß** die zweite Kontaktfläche (13') durch Unterbrechungen in mehrere zueinander beabstandete Abschnitte unterteilt ist.

## Claims

1. An exhaust gas cleaning device for motor vehicles powered by internal combustion engines comprising a housing and at least one exhaust gas cleaning body (2) secured therein by bearing elements (3), wherein at least one bearing element (3) is configured as a metal fiber ring (4, 4') arranged at one side of said exhaust gas cleaning body (2) and supported within the housing in the radial and axial direction and having a first contact surface (11) disposed at a radial outer surface (10) and a second contact surface (13, 13') disposed at a front surface (12) of the corresponding exhaust gas cleaning body (2),
**characterized in that**
a notch (15) extending substantially axially is provided between the first (11) and the second (13, 13') contact surface of metal fiber ring (4, 4').

2. Exhaust gas cleaning device in accordance with claim 1,
**characterized in that**
said second contact surface (13, 13') is arranged on a bulged ring section (14) of said metal fiber ring (4, 4').

3. Exhaust gas cleaning device in accordance with claim 2,
**characterized in that**
said bulged ring section (14) of metal fiber ring (4, 4') adjoining second contact surface (13, 13') is of convex curve shape, wherein notch (15) is restricted on one side by a curved surface of said bulged ring section (14).

4. Exhaust gas cleaning device according to one of claims 1-3,
**characterized in that**
metal fiber ring (4, 4') is configured as a meshed or knitted wire ring.

5. Exhaust gas cleaning device according to one of claims 1-4,
**characterized in that**
metal fiber ring (4, 4') is supported on an inclined supporting surface (6) of said housing.

6. Exhaust gas cleaning device in accordance with claim 5,
**characterized in that**
supporting surface (6) is of conical configuration.

7. Exhaust gas cleaning device in accordance with claim 6,
**characterized in that**
the double angle of cone to supporting surface (6) amounts to between 30° and 60°.

8. Exhaust gas cleaning device according to one of claims 1-7,
**characterized in that**
said housing comprises a casing (1) and at least one funnel connected to same.

9. Exhaust gas cleaning device in accordance with claim 8,
**characterized in** tht
supporting surface (6) is arranged on a tapered border portion of said casing (1).

10. Exhaust gas cleaning device in accordance with claim 8,
**characterized in that**
supporting surface (6) is arranged on an extending border portion of said funnel.

11. Exhaust gas cleaning device in accordance with one of claims 8-10,
**characterized in that**
casing (1) is configured as a winding member.

12. Exhaust gas cleaning device in accordance with one of claims 8-10,
**characterized in that**
casing (1) is configured as a tubular member.

13. Exhaust gas cleaning device according to one of claims 1-12,
**characterized in that**
said at least one exhaust gas cleaning body (2) is of thin-walled configuration, especially preferable is ultrathin walled configuration.

14. Exhaust gas cleaning device according to one of claims 1-13,
**characterized in that**
the elasticity to metal fiber ring (4, 4') in the radial direction is less than that in the axial direction.

15. Exhaust gas cleaning device according to one of claims 1-14,
**characterized in that**
said second contact surface (13') is divided into a plurality of sections spatially separate from one another by means of interrupters.

## Revendications

1. Dispositif d'épuration des gaz d'échappement pour un véhicule automobile propulsé par moteur à combustion interne, comportant un corps et au moins un élément épurateur de gaz d'échappement (2) qui est supporté à l'intérieur dudit corps par au moins un élément support (3), au moins un élément support (3) étant conformé en anneau de fibres métalliques (4, 4') disposé d'un côté sur l'élément épurateur de gaz d'échappement (2), qui prend appui sur le corps dans les directions axiale et radiale et est en contact par une première surface de contact (11) avec une première surface extérieure (10) radiale et par une deuxième surface de contact (13, 13') avec une surface frontale (12) de l'élément épurateur de gaz d'échappement (2), **caractérisé en ce qu'**il est prévu entre les première (11) et deuxième (13, 13') surfaces de contact de l'anneau de fibres métalliques (4, 4'), une rainure (15) qui s'étend essentiellement dans la direction axiale.

2. Dispositif d'épuration des gaz d'échappement selon la revendication 1, **caractérisé en ce que** la deuxième surface de contact (13, 13') est disposée sur une portion d'anneau (14) en forme de bourrelet de l'anneau de fibres métalliques (4, 4').

3. Dispositif d'épuration des gaz d'échappement selon la revendication 2, **caractérisé en ce que** la portion d'anneau (14) en forme de bourrelet de l'anneau de fibres métalliques (4, 4'), dans le voisinage de la deuxième surface de contact (13, 13') présente une courbure convexe, la rainure (15) étant délimitée d'un côté par une surface courbe de la portion d'anneau (14) en forme de bourrelet.

4. Dispositif d'épuration des gaz d'échappement selon une des revendications 1 à 3, **caractérisé en ce que** l'anneau de fibres métalliques (4, 4') se présente sous la forme d'un anneau de fil métallique tricoté.

5. Dispositif d'épuration des gaz d'échappement selon une des revendications 1 à 4, **caractérisé en ce que** l'anneau de fibres métalliques (4, 4') prend appui sur une surface d'appui (6) du corps.

6. Dispositif d'épuration des gaz d'échappement selon la revendication 5, **caractérisé en ce que** la surface d'appui (6) est conique.

7. Dispositif d'épuration des gaz d'échappement selon la revendication 6, **caractérisé en ce que** l'angle de cône double de la surface d'appui (6) est compris entre 30° et 60°.

8. Dispositif d'épuration des gaz d'échappement selon une des revendications 1 à 7, **caractérisé en ce que** le corps comprend une enveloppe (1) et au moins une partie formant entonnoir liée à celui-ci.

9. Dispositif d'épuration des gaz d'échappement selon la revendication 8, **caractérisé en ce que** la surface d'appui (6) est aménagée sur une portion de bord de l'enveloppe (1) qui se rétrécit.

10. Dispositif d'épuration des gaz d'échappement selon la revendication 8, **caractérisé en ce que** la surface d'appui (6) est aménagée sur une portion de bord de l'entonnoir qui s'évase.

11. Dispositif d'épuration des gaz d'échappement selon une des revendications 8 à 10, **caractérisé en ce que** l'enveloppe (1) est réalisée sous forme de pièce enroulée.

12. Dispositif d'épuration des gaz d'échappement selon une des revendications 8 à 10, **caractérisé en ce que** l'enveloppe (1) est réalisée sous forme de tube.

13. Dispositif d'épuration des gaz d'échappement selon une des revendications 1 à 12, **caractérisé en ce que** l'élément épurateur de gaz d'échappement (2), au nombre d'au moins un, est réalisé selon la technique à paroi mince, en particulier selon la technique à paroi ultra-mince.

14. Dispositif d'épuration des gaz d'échappement selon une des revendications 1 à 13, **caractérisé en ce que** la souplesse de l'anneau fibres métalliques (4, 4') dans la direction radiale est plus faible que dans la direction axiale.

15. Dispositif d'épuration des gaz d'échappement selon une des revendications 1 à 14, **caractérisé en ce que** la deuxième surface de contact (13') est divisée par des discontinuités en plusieurs portions espacées les unes des autres.
